(19) **Europäisches Patentamt**
**European Patent Office**
**Office européen des brevets**

(11) **EP 2 285 092 B1**

(12) **EUROPEAN PATENT SPECIFICATION**

(45) Date of publication and mention
of the grant of the patent:
**17.04.2019 Bulletin 2019/16**

(51) Int Cl.:
***H04N 5/14*** *(2006.01)*

(21) Application number: **10169501.3**

(22) Date of filing: **14.07.2010**

(54) **Method and apparatus for adjusting motion fields in a memory - access efficient way to frame interpolation frameworks**

Verfahren und Vorrichtung zur Einstellung von Bewegungsfeldern in einem Speicher, zugriffseffizienter Weg zu Rahmeninterpolations-Frameworks

Procédé et appareil pour ajuster les champs de mouvement dans une mémoire - moyen efficace d'accès aux structures d'interpolation de cadre

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **04.08.2009 TR 200906020**

(43) Date of publication of application:
**16.02.2011 Bulletin 2011/07**

(73) Proprietor: **Vestel Elektronik Sanayi ve Ticaret A.S.**
**45030 Manisa (TR)**

(72) Inventors:
• **Özer, Nuri**
  **45030, Manisa (TR)**
• **Bastug, Ahmet**
  **45030, Manisa (TR)**

(74) Representative: **Cayli, Hülya**
**Paragon Consultancy Inc.**
**Koza Sokak No: 63/2**
**GOP**
**06540 Ankara (TR)**

(56) References cited:
**EP-A1- 1 734 767        EP-A1- 1 855 474**
**EP-A1- 2 237 560        US-A- 5 748 247**
**US-A1- 2006 018 383    US-A1- 2007 140 346**

• **JEON B-W ET AL: "COARSE-TO-FINE FRAME INTERPOLATION FOR FRAME RATE UP-CONVERSION USING PYRAMID STRUCTURE", IEEE TRANSACTIONS ON CONSUMER ELECTRONICS, IEEE SERVICE CENTER, NEW YORK, NY, US, vol. 49, no. 3, 1 August 2003 (2003-08-01) , pages 499-508, XP001172089, ISSN: 0098-3063, DOI: 10.1109/TCE.2003.1233761**

**EP 2 285 092 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

This invention relates to a method for adapting the motion vector field to frame interpolation framework in a memory-access efficient way for real-time implementation.

### Prior Art

In television industry, 100 Hz and 120 Hz televisions are very common and films are produced in 24 Hz and 25 Hz. When showing the film on 100 Hz or 120 Hz TV, film judder and motion blur are formed. So that two main problems of the television technology are the judder and motion blur. In order to remove the judder and blur from video, many Film Judder Removal (FJR), and Frame Rate Conversion (FRC) algorithms are proposed.

Film Judder Removal (FJR) and Frame Rate Conversion (FRC) are very important issues for many television producers. Most of new Liquid Crystal Displays (LCDs) are 100 Hz or 120 Hz and the films are produced as 24 Hz or 25 Hz and the video content as 50 Hz or 60 Hz. To show the low frame rate films or videos on high frame rate LCDs, it is necessary to generate new frames between input frames. For this, the Motion Vector Field (MVF) should be found and by using this MVF interpolated frame should be created. There are two main problems to solve for accurate interpolation.

> 1. The correct vectors should be found for compensation part of the algorithm. Otherwise, the artefacts are formed on the interpolated frame.
> 2. The algorithm (motion estimation and compensation together) should be implemented in real-time for TV. Otherwise, the algorithm cannot be used in TV industry

According to the method by Gerard de Haan (G. de Haan, and P. W. A. C. Biezen, "An Efficient True-Motion Estimator Using Candidate Vectors from a Parametric Motion Model", IEEE Trans. on Circuits and Sys. for Video Technology, Vol. 8, No.1, February 1998.), true motion is sought between two frames by using the candidate vectors from a parametric motion model (3D recursive search). By using the motion vector, outputs of the search interpolated frame is generated.

According to method and apparatus for detecting motion vectors based on hierarchical motion estimation by Hae-Mook Jung *(H.M. Jung, "Method and Apparatus for Detecting Motion Vectors Based on Hierarchical Motion Estimation", United States Patent, Patent Number:* 5,583,580, *Date of Patent: Dec. 10, 1996*), motion vectors are determined between two frames by employing a time-sharing multi-tier hierarchical motion estimation approach, wherein the candidate blocks are grouped into a multiple number of hierarchical search areas. After determination of the Motion Vector Field (MVF) motion compensation part is applied.

The above two MVF estimation methods and many other variants do not however correspond to the vectors that should be used in the application framework. Depending on the application a set of specific MVF adjustment and correction post processing operations is needed before motion compensation.

In US 2009/0129472 A1, a method for performing motion estimation associated with an encoder is disclosed. For example, the method selects a motion vector centering for a current block in a search area of at least one reference picture. The method calculates a matching cost for each of a plurality of candidate motion vectors derived from the search area, and outputs at least one of the plurality of candidate motion vectors based on the matching cost associated with each of the plurality of candidate motion vectors to a main coding loop.

In US 2008/0292000 A1, a method of providing motion estimation which comprises estimating a first motion vector and second motion vector for a first block in a frame of video, determining an error metric corresponding to the first and second motion vector and selecting the motion vector having the better error metric among the first and second motion vector, is described.

In the published document no EP1734767A1 of the state of art, a method for processing a digital image data, more specifically object boundary accurate motion estimation, is disclosed. In said method, digital image data to be processed are received as input data. Then a process of motion estimation is carried out with respect to said image data and as a result motion estimation data are generated. Said motion estimation data might comprise a motion vector field which being constituted by a plurality of motion vectors representing the motion of an object which is contained by a sequence of images. Then said motion estimation data are provided as an output. In motion estimation process, an initial motion estimation process is carried out in a bi-directional manner. Then the result is fed into the process of optional region adaptive motion vector post-processing which is used to increase the homogeneity of the motion vector field. Then a region adaptive motion vector border map is generated by using a respective global and/or local refinement conditions. Based on the underlying refinement conditions, regions of the images are split up or refined. After then, a motion vector field and the constituting motion vectors are re-estimated on the split regions, preferably in a bi-directional manner, and in particular based on split region properties. Then split region properties may be used in the re-estimation.

Another patent document EP1855474A1 discloses a method for generating an interpolated image between two images of an input image sequence. However, said patent document does not always provide reliable motion vectors because of the collision problem.

The algorithm developed by this invention not only fixes the incorrect vectors but also applies a proper shift on the MVF in order to makeup the latency between the ME instant and frame synthesis instant.

The present invention is defined in claim 1.

## Object of the Invention

The object of the present invention is to find the correct vectors for compensation part of the algorithm.

Another object of the present invention is to implement both the motion estimation and compensation algorithms in real-time for TV.

## Brief Description of the Drawings

The invention is illustrated in the appended figures, in which;

Figure 1: The follow chart of the algorithm developed by this invention is shown
Figure 2a: Motion vector 16x16 is shown
Figure 2b: Motion vector 8x8 is shown
Figure 3a: Previous motion vector is shown
Figure 3b: Current motion vector is shown
Figure 4a: Motion vector without collision block problem is shown
Figure 4b: Motion vector with collision block problem is shown
Figure 5a: Block diagram of motion vector shifting algorithm, comparison of distances, is shown
Figure 5b: Block diagram of motion vector shifting algorithm, comparison of old and new SAD values, is shown
Figure 6a: Before expansion and replication of the vector field, Block Size = 16x16 is shown
Figure 6b: After expansion and replication of the vector field, Block Size = 4x4 is shown
Figure 7: Candidate vector traversing order is shown
Figure 8: Bidirectional motion search is shown
Figure 9: Block diagram of enhanced bidirectional search is shown

## Detailed Description of the Invention

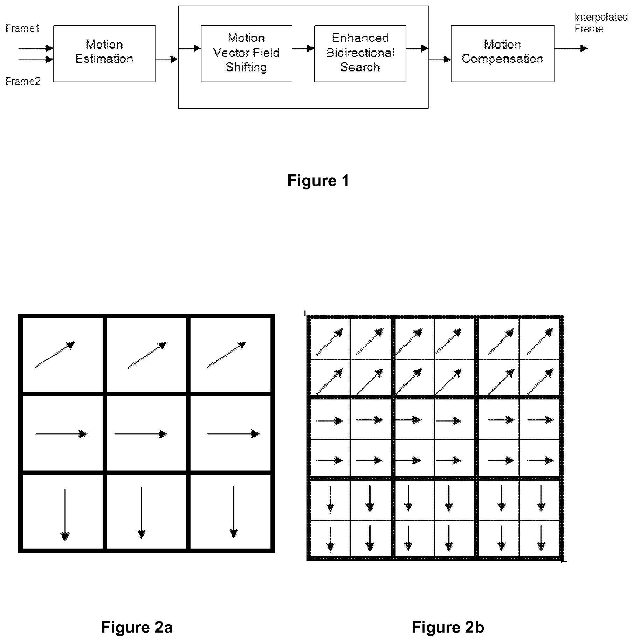

Present invention is used between two main sections of FJR or FRC motion estimation and compensation as shown in Figure1. The algorithm developed by this invention comprises two steps;

1. Motion Vector Field Shifting
2. Enhanced Bidirectional Search

1. Motion Vector Field Shifting;

Since small block size gives more accurate results, the motion vector field (MVF) (big block) is divided into smaller size and replicated to reach to the final synthesis size as shown in Figures 2a and 2b. Then in order to makeup for the "half-a-frame" or "quarter-a-frame" latency between motion estimation (ME) instant and frame synthesis instant, MVF elements change their positions by motion vectors, equal to half or quarter of their values. Also any other latency can be made up depending on the distances between interpolated frame and the previous or current frame and in addition to motion vector of frame, the global motion is also used to shift vector field. For example; as it is shown in figures 2a and 2b, each big block in the previous motion (figure 2a) vector field is divided by two and four, 8x8 blocks are created from a 16x16 blocks. Then vectors in the 16x16 blocks are replicated to each 8x8 blocks. In other words, if the block size of previous one is 16x16, new block size of vector field can be 8x8, 4x4, or 2x2. So the vectors in the big blocks (shown in Figure 2a) are replicated to small blocks (shown in Figure 2b) and new motion vector field is created. Also sum of absolute differecences (SAD values) are replicated.

The vectors in the replicated MVF are transferred to new MVF (shifting map) by using motion vectors in the blocks and global vector. There are some important criteria and steps while locating the vector in the shifted MVF, such as;

- add the half length of the vector to the shifted MVF
- find the updated block index
- boundary corrections on the border vectors of the frames
- check whether there is collision blocks
- check the distance between the vector and global vector to decide for the new vector.
- the blend of collision blocks and the distance between the vector and global vector for the final decision

First of all; since the block size of the new shifted MVF is the same as the replicated MVF and the vector field will be between the previous frame and the current frame, half length of the vector is added to block index. Also "half-a-frame" or "quarter-a-frame" latency would be possible between ME instant and frame synthesis instant.

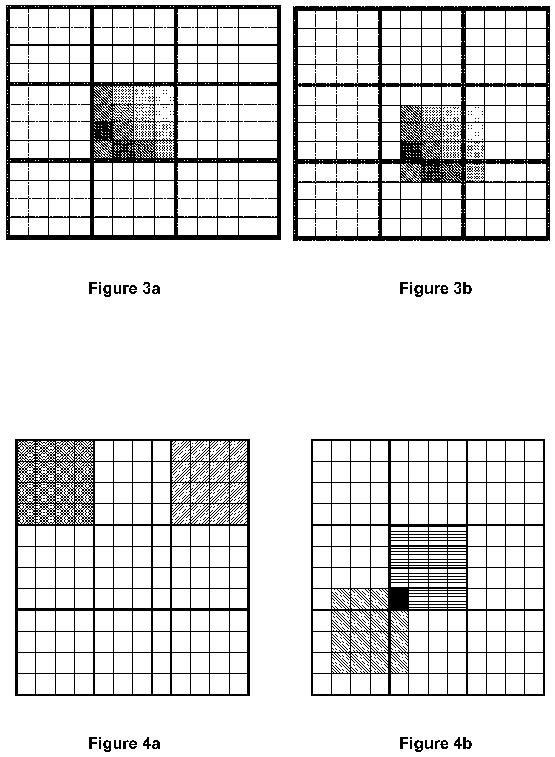

In the figures 3a and 3b, shifting of motion vector group of a large block from the replicated MVF to shifted MVF is shown. Block indexes of each vector in replicated MVF is transferred to new shifted MVF's blocks are the addition of half of the vector sizes in case of frame doubling and block index value in the replicated block size. As shown in Figure 3, in order to find the updated block index, the value found by addition of previous block index and half or quarter length of the vector of that block is divided by new (updated) block size. For example; assume that block size is 4,

$$MVmapR(ij) = 6 \qquad\qquad i : \text{source block R index}$$
where;
$$MVmapC(i,j) = 14 \qquad\qquad j : \text{source block C index}$$
then,
$$MVmapR\_Shifted(m, n) = 6 \qquad\qquad m: \text{destination block R index}$$
where;
$$MVmapC\_Shifted(m, n) = 14 \qquad\qquad n: \text{destination block C index}$$
and;
$$m = i + \text{rounding}\,(6/(2*4)) = i+1 \quad \text{and} \qquad n = j + \text{rounding}\,(14/(2*4)) = j+2$$

Also, there should be boundary corrections on the border vectors of the frames. In other words if only bidirectional synthesis is used clipping needs to be applied for the vectors exceeding the boundaries.

As shown in figure 4b, there can be some blocks that are matched with the same destination block which are called collision blocks. If there is no collision (figure 4a), one vector is shifted to the destination block. Otherwise, SAD values of collided blocks are compared, and the source block that has a smaller SAD value locates its vector in that destination block. For example; assume that block size is 4, then,

Vector 1 on block with index (4,4) : MVmapR(4,4) = 8 and MVmapC(4,4) = 8 and;
Vector 2 on block with index (6,6) : MVmapR(6,6) = -8 and MVmapC(6,6) = -8

Then in a frame rate doubling framework they will collide on block with index (5,5). The blocks (4, 4) and (6, 6) are collided on the (5, 5) block in the shifted MVF. To choose the correct vector, SAD values are compared. The vector that has the smaller SAD is assigned to the collided block.

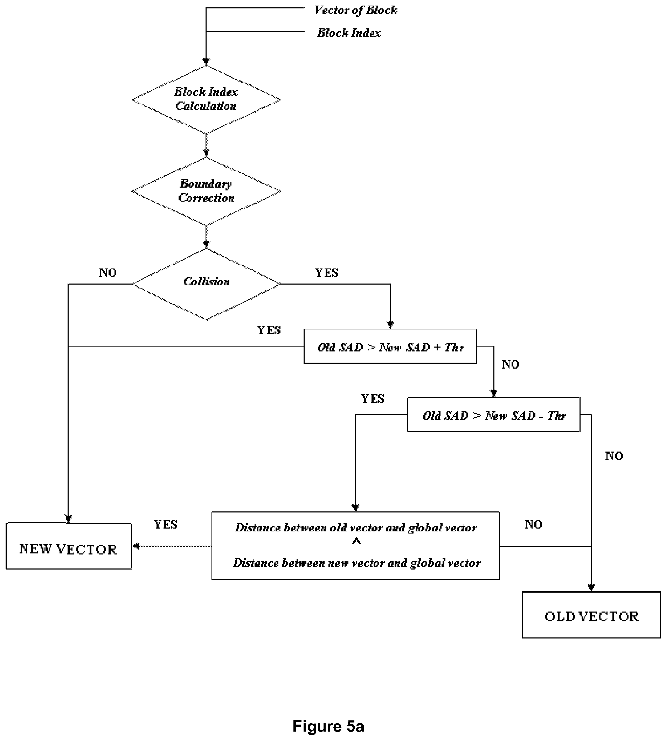

Moreover, if the blocks are collided, SAD values are not enough to give last decision. For example; if old and new SAD values are too close to each other, the distance between the vector and global vector is useful in decision process. The vector that is close to the global vector is chosen for the vector of that block. (Shown in figure 5a)

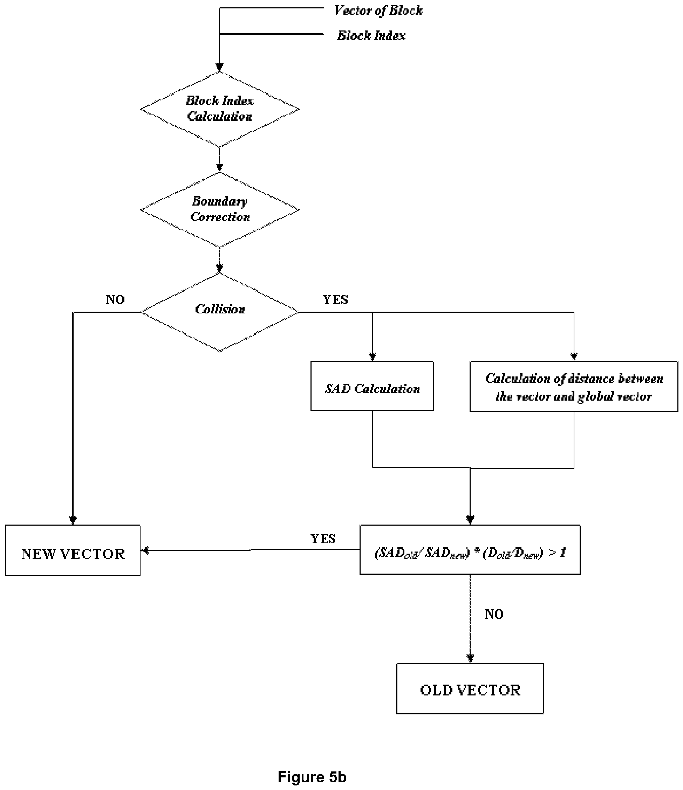

Also, as shown in figure 5b, the final decision could be the result of the blend of collision blocks and the distance between the vector and global vector is useful in decision process. For example; assume that there is already an assignment on a particular destination block. Denote its SAD as Old SAD. Assume, later a second vector from another source block competes for the same destination. Then the following is applied to decide for the winner;

$$\frac{\text{Old SAD}}{\text{New SAD}} * \frac{\text{Distance between old vector and global vector}}{\text{Distance between new vector and global vector}} < 1 \quad => \text{old vector is chosen}$$

or;

| Old SAD | Distance between old vector and global vector | | |
|---|---|---|---|
| ------------- | * | ----------------------------------------------------------------- > 1 | => new vector is chosen |
| New SAD | Distance between new vector and global vector | | |

According to the equation mentioned above, if the corollary of the multiplication of the proportion of Old SAD to New SAD and proportion of the Distance between old vector and global vector to Distance between new vector and global vector is smaller than 1, then old vector is chosen, if it is bigger than 1, then new vector is chosen.

2. Enhanced Bidirectional Search;

After motion vector shifting step, there still can be blocks without motion vector. To assign a vector to each empty block, "Bidirectional Search" algorithm is used.

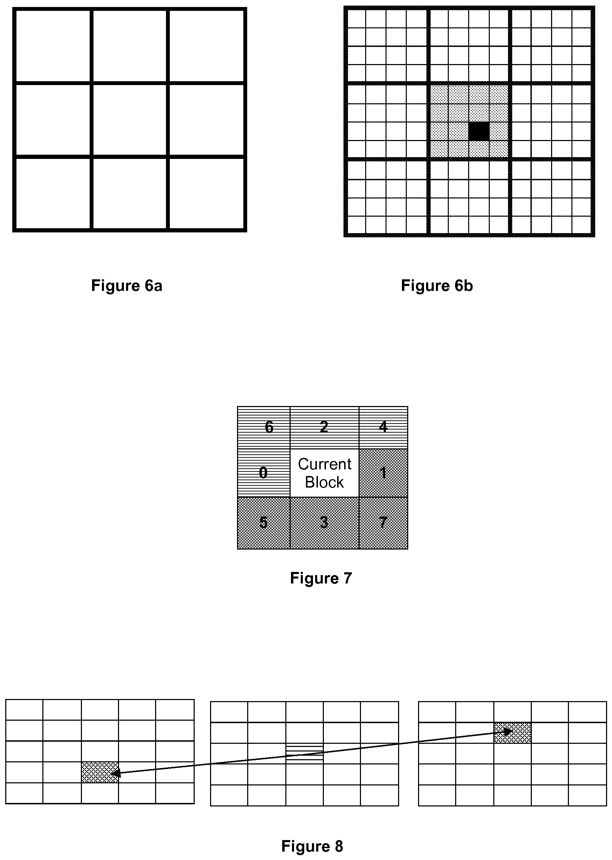

After expansion and replication, the vector field is converted from the old big block shown in Figure 6a to smaller blocks shown in Figure 6b. In Figure 6b all blocks in the same big block should be initialized as the same vector. For example, the all light grey blocks should have same vector with the dark grey (black) blocks.

In other words, newly created small, empty block in the old big block will have the same vector with the vector that the most of the other small blocks which are created from the same old block with the empty block has. For example; if we assume that four small blocks are created from the old block and one of them is empty, then regarding the algorithm, the empty one will have the same vector with the most of the other three small blocks.

After initialization, the blocks not including vectors, should be filled by using candidate (neighbourhood) vectors. Depending on the number of the newly created small blocks, there can be different number of candidate vectors. Also, there can be same and/or different/identical candidate vectors. So, in order to determine the vector in the empty block, just the candidates having different vectors are tested, instead of testing all of the candidate vectors. For example, if we have 9 candidates, m different candidate vectors, i.e. m=3, are tested to determine the correct vector of empty block. In the figure 7, the specific order for this example should be followed choosing the candidate vectors is shown. In addition to that, the vectors that are tested once, are not needed to be tested again.

Memory access is the main bottleneck in the real time implementation of block matching operations (SAD computation). Therefore, finding a way to decrease the number of block matching operations from 9 to m is important. Moreover, since decrease in the number of candidate vectors will affect the performance, selection order of the candidate is crucial. The order which is followed should be determined regarding the current vector field. For the specific empty block, the most similar vector to the vector in the previous vector field and also to the neighbour vectors, which are determined before the block, should be tested primarily. Then the other vectors should be tested according to their similarities. For example; if the current block in the previous vector field has a motion vector that is directed upwards, the first order becomes the vector whose direction is upwards.

Moreover, the selection order of the candidate vector can be decided by using the global vector. The candidate vector which is nearest to global vector can be chosen first, and the rest of the order is determined according to the similarity, such as, the inner product value, between the global vector and the candidate vector.

In figure 7, the following pseudo code is applied to the "traverse" pattern. If it is assumed that m =3;

```
SelVectCount = 1; // initial counter value for the number of selected vectors till present
for(m=0; m<8; m++) // start traversing the vector set in the precomputed order
{        //Row and column indices of the candidate vector
    indR = TraversePattern[m][0];
    indC = TraversePattern[m][1];


    //Temporary Assignments
    Candidate_Set[SelVectCount][0] = MVmapR_Shifted[(i+indR)][(j+indC)];
    Candidate_Set[SelVectCount][1] = MVmapC_Shifted[(i+indR)][(j+indC)];


    for(n=0; n<SelVectCount; n++)
    {       if (Candidate_Set[SelVectCount][0] == Candidate_Set[n][0]  &&
            Candidate_Set[SelVectCount][1] == Candidate_Set[n][1])
    {       SelVectCount--; // decrement in the selected vectors counter

            break; // break when the candidate vector is same as an earlier one    }}
    SelVectCount++; // increment in the selected vectors counter
    if (SelVectCount == 3) // m=3

            break; // break when maximum number of allowed vectors is reached  }
```

After the final candidate vector set is obtained, all of its vectors are put under bidirectional block matching test.

The block value, which is a half candidate vector length ahead from the current block in the current frame, and the block value, which is a half candidate vector length rearward from the current block in the previous frame, are shown in figure 8.

In the case of frame doubling, the candidate vector compensating the minimum value of distances between two blocks, shown in figure 8, is chosen as the vector of that block. SAD of that block is equal to the minimum value of distances between two marked blocks.

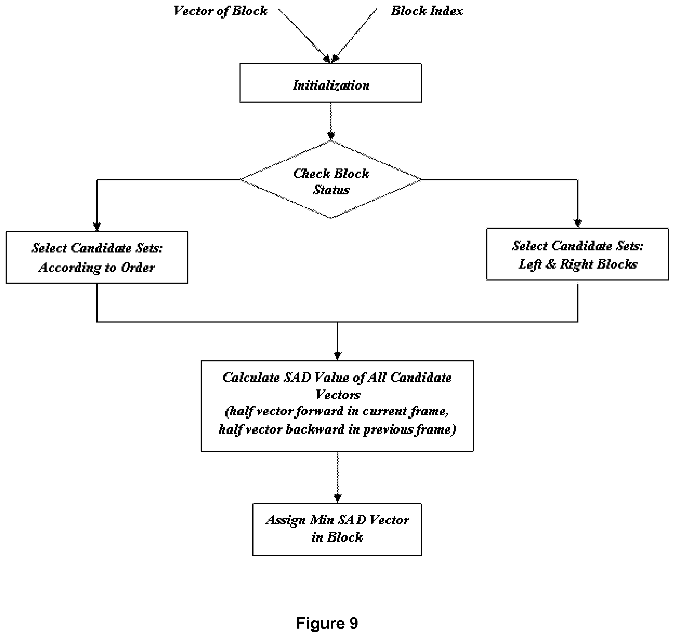

In the case of other frame conversion rates, the block distances from the previous and next frames are chosen proportional to the time difference between the interpolation distance and the frame of the block shown in figure 9.


**Claims**

1.   A method for adapting a motion vector field to frame interpolation framework in a memory-access efficient way for real-time implementation comprising the steps of the motion vector field shifting followed by enhanced bidirectional searching, the motion vector field shifting comprises the steps of,

   • division of the motion vector field into blocks having smaller size,
   • replication of the motion vector field to said blocks having smaller size,
   • shifting the vectors in the replicated motion vector field to a new motion vector field by using vectors in the blocks and the global motion vector,

   **characterized in that;** the motion vector field shifting being further **characterized by**,

   • locating the vector in the shifted field by,

      i. adding the half length of the vector to the shifted motion vector field,

ii. finding the updated block index,

iii. designating boundary corrections on the border vectors of the frames,

iv. checking whether there are some blocks that are matched with the same destination block which are called collision blocks,

v. in the case of presence of collision blocks, determining the vector of the destination block according to an assigned sum of absolute difference value of the destination block, which is called old sum of absolute difference value, and sum of absolute difference values of the collision blocks, which are called old sum of absolute difference values, wherein the vector of source block that has a smaller sum of absolute difference value is located in that destination block,

vi. in the case of being no collided blocks, one vector is shifted to the destination block

and **in that** enhanced bidirectional searching, which is used in order to assign a vector to the each empty block, comprises the steps of,

• determination of the empty blocks,

• determination of the selection order for testing the neighbourhood vectors of empty blocks as candidate vectors in order to fill the empty blocks,

• putting the candidate vectors under bidirectional block matching test in order to fill the empty blocks with vectors,

• decision for the vectors of the empty blocks, and

• application of the vector to the empty block.

2. A method according to claim 1, wherein; if said old and new sum of absolute difference values are too close to each other, the distance between the vector and global vector are compared and the vector that is close to the global vector is chosen for the vector of that said block.

3. A method according to claims 1 or 2 wherein; if the corollary of the multiplication of the proportion of said old sum of absolute difference to new sum of absolute difference and proportion of the distance between old vector and global vector to distance between new vector and global vector smaller than 1, then old vector is chosen.

4. A method according to claims 1 or 2 wherein; if the corollary of the multiplication of the proportion of said old sum of absolute difference to new sum of absolute difference and proportion of the distance between old vector and global vector to distance between new vector and global vector is bigger than 1, then new vector is chosen.

5. A method according to claim 1 wherein; the selection order of candidates is determined according to similarities of vectors to the vector in the previous vector field and also to the neighbour vectors which are determined before the block.

6. A method according to claim 1, wherein; the selection order of the candidate vector is decided by using the global vector.

7. A method according to claims 1 or 6, wherein; the candidate vector which is nearest to global vector is tested first and the rest of the selection order is determined according to the similarities between the global vector and the candidate vector.

8. A method according to claims 1-7 wherein; in the case of frame doubling, the candidate vector compensating the minimum value of distances between two blocks is chosen as the vector of that block.

9. A method according to claims 1-7 wherein; in the case of frame conversion rates, the block distances from the previous and next frames are chosen proportional to the time difference between the interpolation distance and the frame of the block.

**Patentansprüche**

1. Verfahren zum Anpassen eines Bewegungsvektorfeldes an Bildinterpolations-Rahmenbedingungen in einer im Hinblick auf Speicherzugriff effizienten Weise zur Echtzeitimplementation mit den Schritten der Verschiebung des Bewegungsvektorfeldes gefolgt von erweiterter bidirektionaler Suche, wobei die Verschiebung des Bewegungsvektorfeldes die Schritte beinhaltet

• Aufteilung des Bewegungsvektorfeldes in Blöcke mit geringerer Größe,
• Kopieren des Bewegungsvektorfeldes in die Blöcke mit geringerer Größe,
• Verschieben der Vektoren in dem kopierten Bewegungsvektorfeld in ein neues Bewegungsvektorfeld unter Verwendung der Vektoren in den Blöcken und des globalen Bewegungsvektors,

**dadurch gekennzeichnet, dass** die Verschiebung des Bewegungsvektorfeldes weiter **gekennzeichnet ist durch**

• Lokalisieren des Vektors in dem verschobenen Feld **durch**

i. Addieren der halben Länge des Vektors zu dem verschobenen Bewegungsvektorfeld,
ii. Finden des aktuellen Blockindex,
iii. Bestimmen von Randkorrekturen an den Grenzvektoren der Bilder,
iv. Prüfen, ob es Blöcke gibt, die demselben Zielblock zugeordnet sind und die als Kollisionsblöcke bezeichnet werden,
v. im Fall des Vorhandenseins von Kollisionsblöcken, Bestimmen des Vektors des Zielblocks gemäß einer zugewiesenen Summe eines absoluten Differenzwertes des Zielblocks, was als alte Summe des absoluten Differenzwertes bezeichnet wird, und einer Summe von absoluten Differenzwerten von Kollisionsblöcken, die als alte Summe von absoluten Differenzwerten bezeichnet wird, wobei der Vektor des Quellenblocks, der eine geringere Summe des absoluten Differenzwertes hat, in diesen Zielblock lokalisiert ist,
vi. falls keine kollidierenden Blöcke vorhanden sind, Verschieben eines Vektors in den Zielblock,

und dass die erweiterte bidirektionale Suche, die verwendet wird, um jedem leeren Block einen Vektor zuzuweisen, die Schritte beinhaltet
• Bestimmen von leeren Blöcken,
• Bestimmen der Auswahlreihenfolge zum Testen von Nachbarvektoren von leeren Blöcken als Kandidatenvektoren, um leere Blöcke zu füllen,
• Ausführen eines bidirektionalen Blockzuordnungstests für die Kandidatenvektoren, um die leeren Blöcke mit Vektoren zu füllen,
• Entscheidung über die Vektoren der leeren Blöcke und
• Anwendung des Vektors auf den leeren Block.

**2.** Verfahren nach Anspruch 1, wobei, wenn die alte und die neue Summe absoluter Differenzwerte zu nahe beieinanderliegen, die Distanz zwischen dem Vektor und dem globalen Vektor verglichen wird und der Vektor, der nahe an dem globalen Vektor ist, für den Vektor dieses Blockes ausgewählt wird.

**3.** Verfahren nach Anspruch 1 oder 2, wobei, wenn die Folge der Multiplikation des Verhältnisses der alten Summe der absoluten Differenz zu der neuen Summe der absoluten Differenz und des Verhältnisses des Abstandes zwischen altem Vektor und globalem Vektor zu dem Abstand zwischen neuen Vektor und dem globalen Vektor kleiner als 1 ist, der alte Vektor gewählt wird.

**4.** Verfahren nach Anspruch 1 oder 2, wobei, wenn die Folge der Multiplikation des Verhältnisses der alten Summe der absoluten Differenz zu der neuen Summe der absoluten Differenz und des Verhältnisses des Abstandes zwischen altem Vektor und globalem Vektor zu dem Abstand zwischen neuen Vektor und dem globalen Vektor größer als 1 ist, der neue Vektor gewählt wird.

**5.** Verfahren nach Anspruch 1, wobei die Auswahlreihenfolge von Kandidaten bestimmt wird gemäß Ähnlichkeiten von Vektoren zu Vektoren in dem vorhergehenden Vektorfeld und zu Nachbarvektoren, die vor dem Block bestimmt sind.

**6.** Verfahren nach Anspruch 1, wobei die Auswahlreihenfolge der Kandidatenvektoren durch Verwendung des globalen Vektors festgelegt wird.

**7.** Verfahren nach Anspruch 1 oder 6, wobei der Kandidatenvektor, der dem globalen Vektor am nächsten ist, zuerst getestet wird und der Rest der Auswahlreihenfolge gemäß den Ähnlichkeiten zwischen dem globalen Vektor und dem Kandidatenvektor festgelegt wird.

**8.** Verfahren nach den Ansprüchen 1-7, wobei in dem Fall von Bildverdoppelung der Kandidatenvektor, der den Minimalwert der Distanzen zwischen zwei Blöcken kompensiert, als der Vektor für diesen Block ausgewählt wird.

**9.** Verfahren nach den Ansprüchen 1-7, wobei in dem Fall von Bildfrequenzumwandlung die Blockdistanzen von den vorhergehenden und nächsten Bildern als proportional zu der Zeitdifferenz zwischen Interpolationsdistanz und dem Bild des Blocks gewählt wird.

## Revendications

**1.** Procédé pour adapter un champ de vecteur de mouvement à un cadre d'interpolation de trame d'une manière efficace pour accéder à la mémoire pour une mise en application en temps réel comprenant les étapes du déplacement de champ de vecteur de mouvement suivi d'une recherche bidirectionnelle améliorée, le déplacement de champ de vecteur de mouvement comprenant les étapes de

- division du champ de vecteur de mouvement en blocs de taille inférieure,
- réplication du champ de vecteur de mouvement dans lesdits blocs ayant une taille inférieure,
- déplacement des vecteurs dans le champ de vecteur de mouvement répliqué vers un nouveau champ de vecteur de mouvement en utilisant des vecteurs dans les blocs et le vecteur de mouvement global, **caractérisé en ce que** le déplacement de champ de vecteur de mouvement est en outre **caractérisé par**
- la localisation du vecteur dans le champ déplacé en :

  i. ajoutant la demi-longueur du vecteur au champ de vecteur de mouvement déplacé,
  ii. trouvant l'index de bloc mis à jour,
  iii. désignant des corrections de limite sur les vecteurs frontaliers des trames,
  iv. vérifiant s'il existe certains blocs qui correspondent au même bloc de destination qui sont appelés blocs de collision,
  v. en cas de présence de blocs de collision, déterminant le vecteur du bloc de destination selon une somme attribuée de valeur de différence absolue du bloc de destination, qui est appelée ancienne somme de valeur de différence absolue, et une somme de valeurs de différence absolue des blocs de collision, qui sont appelées ancienne somme de valeurs de différence absolue, dans lequel le vecteur de bloc source qui a une somme de valeur de différence absolue inférieure est situé dans ce bloc de destination,
  vi. s'il n'y a pas de blocs de collision, un vecteur est déplacé vers le bloc de destination

  et en ce qu'une recherche bidirectionnelle améliorée, qui est utilisée pour attribuer un vecteur à chaque bloc vide, comprend les étapes de
- détermination des blocs vides,
- détermination de l'ordre de sélection pour tester les vecteurs de proximité de blocs vides comme des vecteurs candidats afin de remplir les blocs vides,
- soumission des vecteurs candidats à un test de correspondance de bloc bidirectionnel afin de remplir les blocs vides avec des vecteurs,
- décision pour les vecteurs des blocs vides, et
- application du vecteur au bloc vide.

**2.** Procédé selon la revendication 1, dans lequel ; si lesdites ancienne et nouvelle sommes de valeurs de différence absolue sont trop proches l'une de l'autre, la distance entre le vecteur et le vecteur global sont comparées et le vecteur qui est proche du vecteur global est choisi pour le vecteur dudit bloc.

**3.** Procédé selon les revendications 1 ou 2, dans lequel ; si le corolaire de la multiplication de la proportion de ladite ancienne somme de différence absolue relativement à la nouvelle somme de différence absolue et la proportion de la distance entre l'ancien vecteur et le vecteur global par rapport à la distance entre le nouveau vecteur et le vecteur global est inférieur à 1, alors l'ancien vecteur est choisi.

**4.** Procédé selon les revendications 1 ou 2, dans lequel ; si le corolaire de la multiplication de la proportion de ladite ancienne somme de différence absolue relativement à la nouvelle somme de différence absolue et la proportion de la distance entre l'ancien vecteur et le vecteur global à la distance entre le nouveau vecteur et le vecteur global est supérieur à 1, alors le nouveau vecteur est choisi.

**5.** Procédé selon la revendication 1, dans lequel ; l'ordre de sélection de candidats est déterminé selon des similitudes de vecteurs par rapport au vecteur dans le précédent champ de vecteur et également par rapport aux vecteurs voisins qui sont déterminés avant le bloc.

**6.** Procédé selon la revendication 1, dans lequel ; l'ordre de sélection du vecteur candidat est décidé en utilisant le vecteur global.

**7.** Procédé selon les revendications 1 ou 6, dans lequel ; le vecteur candidat qui est le plus proche du vecteur global est testé en premier lieu et le reste de l'ordre de sélection est déterminé selon les similitudes entre le vecteur global et le vecteur candidat.

**8.** Procédé selon les revendications 1 à 7, dans lequel ; dans le cas d'un doublement de trame, le vecteur candidat qui compense la valeur minimale de distances entre deux blocs est choisie comme le vecteur de ce bloc.

**9.** Procédé selon les revendications 1 à 7, dans lequel ; dans le cas de taux de conversion de trame, les distances de blocs depuis les trames précédentes et suivantes sont choisies proportionnellement à la différence de temps entre la distance d'interpolation et la trame du bloc.

**Figure 1**

**Figure 2a**

**Figure 2b**

Figure 3a

Figure 3b

Figure 4a

Figure 4b

Vector of Block

Block Index

Block Index
Calculation

Boundary
Correction

NO          Collision          YES

YES

Old SAD > New SAD + Thr          NO

YES          Old SAD > New SAD - Thr

NO

NEW VECTOR          YES          Distance between old vector and global vector          NO

∧

Distance between new vector and global vector

OLD VECTOR

Figure 5a

*Vector of Block*

*Block Index*

*Block Index Calculation*

*Boundary Correction*

NO — *Collision* — YES

*SAD Calculation*

*Calculation of distance between the vector and global vector*

NEW VECTOR ← YES — $(SAD_{old}/SAD_{new}) * (D_{old}/D_{new}) > 1$

NO

OLD VECTOR

**Figure 5b**

14

**Figure 6a**

**Figure 6b**

**Figure 7**

**Figure 8**

Vector of Block          Block Index

Initialization

Check Block
Status

Select Candidate Sets:
According to Order

Select Candidate Sets:
Left & Right Blocks

Calculate SAD Value of All Candidate
Vectors
(half vector forward in current frame,
half vector backward in previous frame)

Assign Min SAD Vector
in Block

Figure 9

## REFERENCES CITED IN THE DESCRIPTION

### Patent documents cited in the description

- US 5583580 A
- US 20090129472 A1
- US 20080292000 A1
- EP 1734767 A1
- EP 1855474 A1

### Non-patent literature cited in the description

- **G. DE HAAN ; P. W. A. C. BIEZEN.** An Efficient True-Motion Estimator Using Candidate Vectors from a Parametric Motion Model. *IEEE Trans. on Circuits and Sys. for Video Technology,* February 1998, vol. 8 (1